# EUROPÄISCHE PATENTSCHRIFT

(11) **EP 2 116 800 B1**
(45) Veröffentlichungstag und Bekanntmachung des Hinweises auf die Patenterteilung: **20.03.2013**
(21) Anmeldenummer: 09100266.7
(22) Anmeldetag: 04.05.2009
(51) Int. Cl.: F25D 23/06, F25D 23/02, F16B 5/06

(54) **Kältegerät und zugehöriges Montageelement für dessen Deckplatte**
Cooler and accompanying fitting element for its cover board
Appareil de refroidissement et élément de montage correspondant pour la plaque de recouvrement de celui-ci

(30) Priorität: 09.05.2008 DE 102008022964
(43) Veröffentlichungstag der Anmeldung: 11.11.2009
(73) Patentinhaber: BSH Bosch und Siemens Hausgeräte GmbH, 81739 München (DE)
(72) Erfinder: Schmidt, Rudolf, 89537 Giengen (DE)

(56) Entgegenhaltungen:
- EP-A- 0 251 782
- EP-A- 0 409 347
- EP-A- 0 681 107
- DE-U1-202005 014 835
- US-A- 3 970 399
- US-A1- 2006 239 772

## Beschreibung

Die Erfindung betrifft ein Kältegerät nach dem Oberbegriff von Anspruch 1.

Alleinstehende Kältegeräte, insbesondere Haushaltskältegeräte, wie beispielsweise Kühlschränke oder Gefrierschränke, die nicht in eine Küchenzeile integriert sind, sind üblicherweise mit einer eigenen Deckplatte versehen. Diese Deckplatte ist mit den Seitenteilen des Kältegeräts verbunden. Die Verbindung sollte so stabil ausgeführt sein, dass das Kältegerät, beispielsweise bei einem Umzug, an der Deckplatte angehoben werden kann. Die Deckplatte ist hierzu an ihrem hinteren Rand mit Deckplattenfüßen versehen, die im 90° Winkel von der Deckplatte nach unten abstehen. Die Seitenwände des Kältegeräts sind an ihrem hinteren Rand um eine vertikale Linie gebogen, so dass ein wenige Zentimeter breiter Randstreifen der Seitenwände parallel zur Rückwand des Kältegeräts verläuft. Im oberen Bereich dieser Randstreifen ist normalerweise ein horizontal angeordnetes, offenes Langloch vorgesehen. Durch dieses Langloch wird die Seitenwand üblicherweise mit dem jeweiligen Deckplattenfuß verschraubt, um die Deckplatte an dem Randstreifen der Seitenwand und damit am Kältegerät selbst zu befestigen.

Bei der Montage eines Kältegeräts wird üblicherweise von der Frontseite des Kältegeräts aus gearbeitet. Lediglich für die Befestigung der Deckplatte muss ein zusätzlicher Arbeiter auf der Rückseite der Kältegeräte eingesetzt werden, da die Verschraubung nicht von der Frontseite aus durchgeführt werden kann. Die beschriebene Vorgehensweise wurde daher als umständlich und kostenintensiv erkannt.

Die Patentschrift US 3,970,399 zeigt ein Puppenhaus, wobei Seitenwände mit Böden mittels Verbindungselementen verbunden sind.

Die Gebrauchsmusterschrift DE 20 2005 014 835 U1 zeigt ein kältegerät mit einer Verbindungseinrichtung für zwei Flächenelemente aus Metall, Holz oder Kunststoff, wobei die Verbindungseinrichtung mit zwei Verbindungselementen vorgesehen ist.

Die Offenlegungsschrift EP 0 681 107 A1 zeigt eine Verbindungseinrichtung zum Verbinden von zwei Paneelen. Die Verbindungseinrichtung weist zwei Pins auf, welche in jeweilige Öffnungen der Paneele gesteckt werden.

Der Erfindung liegt die Aufgabe zugrunde, ein Kältegerät nach dem Oberbegriff von Anspruch 1 so auszugestalten, dass die Deckplatte von der Frontseite des Kältegeräts aus montiert und mit den Seitenwänden lösbar verbunden werden kann. Weiterhin soll die Verbindung zwischen Deckplatte und Seitenwänden stabil und kostengünstig ausgeführt sein.

Gelöst wird die Aufgabe gemäß der Erfindung durch ein Kältegerät mit den Merkmalen von Anspruch 1.

Durch die Verwendung eines Steckdübels, der in seiner Halteposition sowohl in einer Öffnung der Seitenwand als auch in einer Öffnung des Deckplattenfußes steckt, ist eine sichere und stabile Verbindung zwischen den Seitenwänden und der Deckplatte gewährleistet. Ein entsprechender Steckdübel kann vorteilhafter Weise aus Kunststoff bestehen und daher sehr preisgünstig gefertigt werden. Da der Steckdübel in einfacher Weise bspw. per Hand eingedrückt werden kann, ist auch die Montage der Deckplatte von der Frontseite des Kältegeräts aus möglich, dadurch lässt sich die Montagezeit der Deckplatte deutlich reduzieren.

In einer vorteilhaften Ausführungsform ist eine Rasteinrichtung für den Steckdübel vorgesehen. Die Rasteinrichtung hält den Steckdübel an seiner Halteposition fest. Dadurch ist die Verbindung zwischen Deckplatte und Seitenteilen nicht nur stabil, sondern auch dauerhaft. Auch bei Schwingungen des Kältegeräts oder beim Umstellen des Kältegeräts kann sich die Verbindung nicht von selbst lösen, d. h. sie ist selbstsichernd ausgebildet.

In einer weiteren vorteilhaften Ausführungsform ist die Rasteinrichtung lösbar ausgebildet. Dadurch kann der Steckdübel später entnommen werden, ohne ihn zerstören zu müssen. Somit ist die Verbindung zwischen Deckplatte und Seitenwand lösbar und auch wieder verschließbar. Sollte an dem Kältegerät eine Reparatur vorgenommen werden müssen, ist es dadurch möglich, die Deckplatte abzunehmen und anschließend auch wieder stabil aufzusetzen.

Der Halteclip ist als Montageelement vorgesehen, der mit dem Steckdübel vorzugsweise in der Weise zusammenwirkt, dass der sichere Halt des Steckdübels sowohl vor der Montage am Kältegerät als auch nach der Montage in der Halteposition gewährleistet ist. Ebenso vorzugsweise dient er der Positionierung des Steckdübels vor der Montage und ermöglicht so das einfache Montieren des Steckdübels.

Erfindungsgemäß wird der Halteclip an der Seitenwand vormontiert. Am besten geschieht dies bereits in der endgültigen Position, so dass der Halteclip bei der Montage des Steckdübels nicht mehr verschoben werden muss.

Ein sicherer Halt des Halteclips in der richtigen Position wird dadurch erreicht, indem der Halteclip in ein zum Rand der Seitenwand offenes Langloch eingreift. Auf diese Weise lässt sich der Halteclip nur noch in horizontaler Richtung verschieben, so dass er auf die Position des Deckplattenfußes eingestellt werden kann. Die vertikale Position des Halteclips ist so bereits vor der Montage des Steckdübels fixiert.

Bevorzugt ist der Steckdübel fest mit dem Halteclip verbunden. Dadurch fallen bei der Montage weniger Einzelteile an. Bei vormontiertem Halteclip befindet sich der Steckdübel so nach dem Aufsetzen der Deckplatte bereits an der Stelle, an der er benötigt wird und muss nur noch in seine endgültige Stellung eingedrückt werden.

Die Verbindung zwischen Steckdübel und Halteclip ist vorzugsweise so ausgeführt, dass sich der Steckdübel in möglichst vielen Freiheitsgraden bewegen lässt. Gleichzeitig soll die Herstellung kostengünstig sein und keinen zusätzlichen Montageschritt zur Verbindung von Steckdübel und Halteclip erfordern. Diese Voraussetzungen werden am besten von einem Filmscharnier erfüllt.

Bei einem weiteren vorteilhaften Ausführungsbeispiel der Erfindung weist der Halteclip eine ringförmige Nut auf, in die die Seitenwand mit den Rändern des Langlochs eingreift. Der Halteclip ist auf diese Weise in seiner vertikalen Position gesichert und kann auch beim Eindrücken des Steckdübels nicht aus dem Langloch herausgedrückt werden. Die gleiche Funktion ist gegeben, wenn der Halteclip statt einer ringförmigen Nut zwei parallele schlitzförmige Nuten aufweist. In beiden Fällen lässt sich der Halteclip in einfacher Weise über die offene Seite des Langlochs in dieses einschieben.

Bei einem weiteren bevorzugten Ausführungsbeispiel weist der Halteclip eine U-förmige Klammer zum Umgreifen des Rands der Seitenwand auf. Auch diese Maßnahme ermöglicht es, die Klammer und damit den Halteclip vorzumontieren und in ihrer exakten Position zu fixieren.

In den Schenkeln der U-förmigen Klammer können Öffnungen vorgesehen sein, die an die Form des Langlochs angepasst sind. Bevorzugt sind jedoch die gegenüberliegenden Öffnungen in den beiden Schenkeln an den Querschnitt des Steckdübels angepasst. Auf diese Weise kann der Steckdübel nach der Montage der Deckplatte nur in einer Position eingedrückt werden.

Vorteilhaft ist ein Schenkel der U-förmigen Klammer federnd ausgebildet. Der Halt des Halteclips in der vormontierten Position wird durch diese Maßnahme weiter verbessert.

Der Steckdübel ist bei einem bevorzugten Ausführungsbeispiel mit einer Dübelgrundplatte verbunden. Diese Dübelgrundplatte kann vorzugsweise so dimensioniert sein, dass sie nach der Montage den gesamten Halteclip abdeckt. Nach der Montage des Steckdübels ergibt sich dadurch eine glatte Fläche, in der sich keine Verschmutzungen festsetzen können. Weiterhin wird verhindert, dass der Steckdübel bei der Montage versehentlich durch das Langloch der Seitenwand hindurch gedrückt wird.

Bei einem weiteren bevorzugten Ausführungsbeispiel der Erfindung ist die Dübelgrundplatte so mit der Halteklammer verbunden, dass sich ein Z-förmiger Querschnitt des Halteclips ergibt. Bei diesem Halteclip kann auf ein Filmscharnier verzichtet werden, da der Knick zwischen Dübelgrundplatte und Halteklammer genügend Beweglichkeit für den Steckdübel ermöglicht.

Bevorzugt ist an einem Schenkel der U-förmigen Klammer ein Haltebügel vorgesehen. Dieser Haltebügel bildet mit dem Schenkel einen geschlossenen Rahmen und trägt so nach der Montage des Steckdübels insbesondere zur Stabilisierung der Seitenwand bei. Bei diesem Ausführungsbeispiel ist an dem Haltebügel vorzugsweise ein Rastvorsprung angebracht. Dieser Rastvorsprung bildet klammerseitig den Teil der Rastvorrichtung, der den montierten Steckdübel sicher in seiner Stellung halten soll. Der dübelseitige Teil dieser Rasteinrichtung ist als Rasthaken ausgebildet, der federnd an der Dübelgrundplatte angebracht ist. Beim Eindrücken des Steckdübels rastet der Rasthaken hinter dem Rastvorsprung ein und gewährleistet so den sicheren Halt des Steckdübels.

Nach der Montage des Steckdübels soll gewährleistet sein, dass die Rasteinrichtung nicht versehentlich wieder gelöst wird. Der Rastvorsprung ist deshalb vorzugsweise durch eine Schutzplatte abgedeckt. In eingedrückter Stellung des Steckdübels befindet sich hinter dieser Schutzplatte ebenfalls der an der Dübelgrundplatte angebrachte Rasthaken.

Die Schutzplatte ist vorzugsweise an der Verlängerung eines Schenkels der U-förmigen Klammer angebracht. Um den Steckdübel in seine Sicherungsstellung eindrücken zu können, ist vorteilhafter Weise in dieser Verlängerung ein Hakenfenster zum Durchtritt des Rasthakens vorgesehen.

Bei Reparaturarbeiten an dem Kältegerät kann es vorkommen, dass die Deckplatte entfernt werden muss. Hierzu muss die Rastverbindung zwischen dem Steckdübel und dem Halteclip gelöst werden. Es ist daher bevorzugt in der Dübelgrundplatte ein Entarretierungsfenster vorgesehen, durch welches der Rasthaken zugänglich ist. Dieses Entarretierungsfenster ist vorzugsweise so dimensioniert, dass der Rasthaken nur mit einem Werkzeug, wie beispielsweise einem Schraubendreher, nicht aber mit der Hand erreichbar ist. Auf dieser Weise können auch Deckplatten in ihrer Stellung gesichert werden, die elektronische Bauteile enthalten und für die die Vorschrift existiert, dass sie nur mit Hilfe von Werkzeug entfernbar sein dürfen.

Weitere Einzelheiten und Vorteile der Erfindung sowie deren Weiterbildungen ergeben sich aus den Unteransprüchen im Zusammenhang mit der Beschreibung von mehreren Ausführungsbeispielen, die anhand der Zeichnungen näher erläutert werden.

### Es zeigen:

- Fig. 1: eine schematische Schnittansicht eines bevorzugten Ausführungsbeispiels eines Halteclips als Montageelement für die Verbindung der Deckplatte des erfindungsgemäßen Kältegeräts mit dessen Seitenwand,
- Fig. 2: eine perspektivische Darstellung des Ausführungsbeispiels nach Fig. 1,
- Fig. 3: anhand einer schematischen Schnittdarstellung in Draufsicht betrachtet die Montage der Deckplatte mit einem Halteclip nach dem Ausführungsbeispiel von Fig. 1,
- Fig. 4: schematisch ein zweites Ausführungsbeispiel eines Halteclips,
- Fig. 5: schematisch ein weiteres Ausführungsbeispiel eines Halteclips, und
- Fig. 6: schematisch ein nicht erfindungsgemäßes Ausführungsbeispiel eines gesicherten Steckdübels.

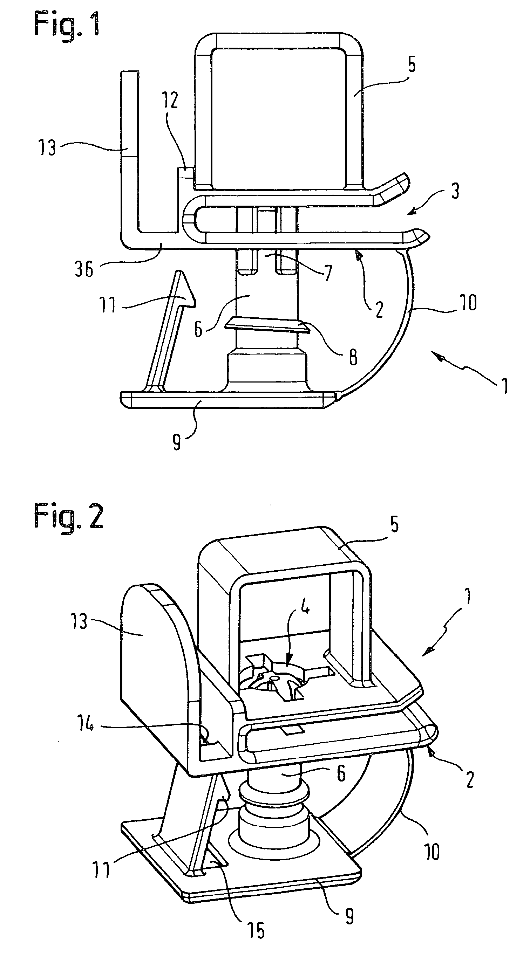

Das in den Fig. 1 und 2 gezeigte Ausführungsbeispiel zeigt als Montageelement einen bevorzugten Halteclip 1 mit allen Bestandteilen. Ein Hauptbestandteil des Halteclip 1 ist die U-förmige Klammer 2. Die beiden Schenkel der Klammer 2 spreizen sich an ihren freien Enden zu einer trichterförmigen Erweiterung 3. Der Haltebügel 5 bildet mit dem oberen Schenkel der Klammer 2 einen geschlossenen Rahmen. An den unteren Schenkel der Klammer 2 schließt sich in gerader Linie an das geschlossene Ende die Verlängerung 36 an. Die Verlängerung 36 ist von dem Hakenfenster 14 (siehe Fig. 2) durchbrochen. Die Verlängerung 36 bildet die Verankerung für die Schutzplatte 13. An dem Haltebügel 5 befindet sich direkt über dem Boden der U-förmigen Klammer 2 ein Rastvorsprung 12.

Über das Filmscharnier 10 ist an dem freien Ende des unteren Schenkels der Klammer 2 die Dübelgrundplatte 9 befestigt. An dieser ist der Rasthaken 11 federnd angebracht. Die Dübelgrundplatte 9 bildet auch die Basis für einen Steckdübel bzw. Raststift 6. In seinem unteren Bereich ist der Steckdübel 6 mit der Rastwulst 8 versehen. Im oberen Bereich weist der Steckdübel 6 Rippen 7 auf, die entlang seiner Mittel-Längsachse angeordnet sind.

Aus Fig. 2 ist ersichtlich, dass die Dübelgrundplatte 9 direkt neben dem Rasthaken 11 ein Entarretierungsfenster 15 aufweist. Weiterhin zeigt diese Darstellung, dass sich in den Schenkeln der U-förmigen Klammer 2 zwei gegenüberliegende Dübelöffnungen 4 befinden. Diese Dübelöffnungen 4 sind in ihrer Form an die Kontur des Steckdübels 6 angepasst.

Die Rippenstruktur des Steckdübels 6 bzw. Raststifts und die Form der Dübelöffnungen 4 in den Schenkeln der Klammer 2 gewährleisten eine Verdrehsicherung des Steckdübels 6. Insbesondere unter Last, also beispielsweise beim Anheben des Kältegeräts an der Deckplatte, könnten Torsionskräfte auf den Steckdübel bzw. Raststifts 6 wirken und ihn so von der Dübelgrundplatte 9 abdrehen. Da in geschlossenem Zustand des Halteclips 1 der Rastwulst 8 des Steckdübels 6 fest über der Klammer verhakt ist, würde sich der Steckdübel beispielsweise für Reparaturarbeiten praktisch nicht mehr aus den Öffnungen 4 der Klammer 2 lösen lassen. Ein solcher Abriss des Steckdübels 6 von der Dübelgrundplatte 9 wird sicher durch die aufeinander abgestimmte Form von Steckdübel 6 und Dübelöffnungen 4 verhindert.

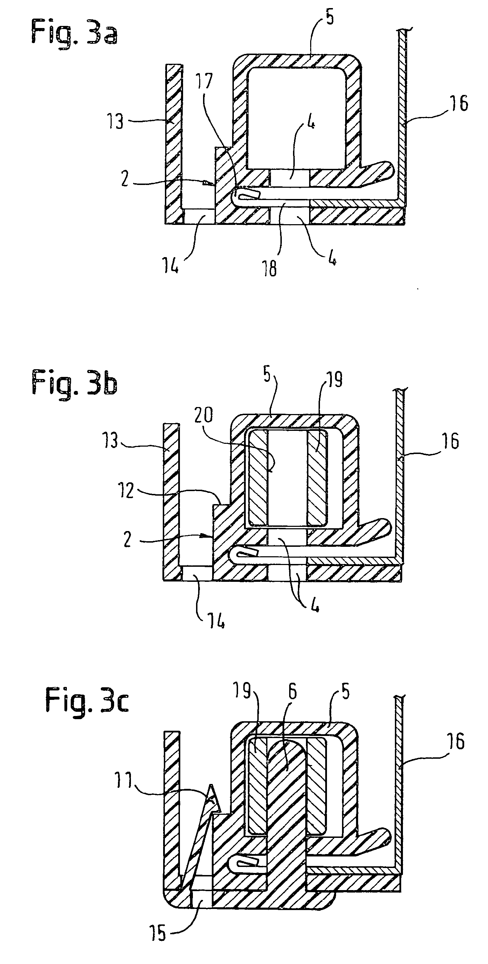

Bei intaktem Steckdübel kann der Halteclip 1 in einfacher Weise nur mit Hilfe eines Werkzeugs, insbesondere eines Schraubendrehers geöffnet werden. Der Schraubendreher 38 wird hierzu durch das Entarretierungsfenster 15 eingeführt und an dem Rasthaken 11 angesetzt (siehe Figur 3c). Durch leichten Druck wird der Rasthaken 11 zurückgebogen und der Steckdübel kann mit geringem Kraftaufwand an der Dübelgrundplatte 9 gefasst und aus den Dübelöffnungen 4 gezogen werden.

Eine unabsichtliche Öffnung des Halteclips 1 wird durch die Schutzplatte 13 verhindert. Diese deckt den Rastvorsprung 12 und den Rasthaken 11 in geschlossener Stellung ab. Ein Lösen des Rasthakens 11 per Hand ist damit unmöglich.

Die Figuren 3a - 3c zeigen den Fortschritt bei der Montage der oberen Deckplatte eines Haushalts-Kältegeräts mittels eines Montageelements an dessen Seitenwänden. Es wird der Halteclip aus den Fig. 1 und 2 als Montageelement verwendet, wobei dieser hier jedoch nicht in allen Einzelheiten, sondern nur schematisch dargestellt ist. Die Seitenwand des Kältegeräts ist mit den Bezugszeichen 16 versehen. Sie weist einen 90°-Knick auf, so dass ein Randbereich parallel zur Rückwand des Kältegeräts verläuft. Der Abschluss der Seitenwand 16 wurde um 180° umgebogen, so dass der Bördelrand 17 entsteht. Das Bördeln dient der Vermeidung von Verletzungen durch scharfe Kanten, sowie der Stabilisierung der Seitenwand 16. In diesem parallel zur Rückwand des Kältegeräts verlaufenden Randbereich der Seitenwand 16 befindet sich das horizontal angeordnete Langloch 18, welches zu dem Bördelrand 17 hin offen ist.

Bereits vor der Montage der Deckplatte wird der Halteclip 1 auf die Seitenwand 16 aufgesteckt. Durch die trichterförmige Erweiterung 3 lässt sich der Halteclip 1 leicht über den Bördelrand 17 schieben. Der Halteclip 1 wird so platziert, dass sich die Dübelöffnungen 4 in den Schenkeln der U-förmigen Klammer 2 mit dem Langloch 8 in der Seitenwand 16 decken. Hierbei kann der Steckdübel 6, der in Fig. 3a und b nicht gezeigt ist, als Führung genutzt werden. Hierzu wird der Steckdübel 6 bereits vor dem Aufstecken des Halteclips 1 soweit in die Dübelöffnungen 4 der Klammer 2 eingesteckt, dass seine Spitze mit der Oberseite des oberen Schenkels bündig abschließt. In diesem Zustand ist es nur an der richtigen Position - in Höhe des Langlochs 18 - möglich, die Klammer 2 über den Bördelrand 17 auf die Seitenwand 16 zu schieben. Nur in dieser Position ist der Bördelrand 17 geöffnet, so dass der Steckdübel 6 in das Langloch 18 eindringen kann.

In Fig. 3b ist ein Zustand gezeigt, in dem die Deckplatte des Kältegeräts bereits aufgesetzt ist. Zu sehen ist dies an dem Deckplattenfuß 19, der sich nun innerhalb des Haltebügels 5 befindet. Um das Dübelloch 20 des Deckplattenfußes 19 mit den Dübelöffnungen 4 in den Schenkeln der Klammer 2 in Deckung zu bringen, kann nach der Justage der Deckplatte der Halteclip 1 in Richtung des Langlochs 18 verschoben werden. Bei der Montage der Deckplatte kann der Steckdübel 6 bereits, wie unter Fig. 3a beschrieben, in den Halteclip 1 eingesteckt sein. Durch diese Maßnahme wird der Halteclip 1 während der Montage der Deckplatte zusätzlich in seiner Stellung fixiert.

Fig. 3c zeigt den Halteclip 1 in fertig montierter Stellung. Auch bei der Fertigmontage erweist es sich als Vorteil, wenn der Steckdübel 6 bereits in die Dübelöffnungen 4 der Klammer 2 eingesteckt war. Ein Arbeiter, der den Steckdübel 6 von der Frontseite des Kältegeräts aus in seine montierte Stellung drückt, tut sich wesentlich leichter, wenn er den Steckdübel 6 nicht erst in die Dübelöffnung 4 des unteren Schenkels der Klammer 2 einführen muss. Bei bereits eingestecktem Steckdübel 6 kann er sogar ohne direkten Sichtkontakt den Montagevorgang zu Ende führen, indem er den Steckdübel 6 in seine endgültige Stellung drückt. Dabei wird der durch das Hakenfenster 14 hindurch tretende Rasthaken 11 von der linken Begrenzungswand der Klammer 2 elastisch zurückgedrückt. Erst in der endgültigen Stellung des Steckdübels 6 bewegt sich der Rasthaken 11, bedingt durch seine federnde Verbindung mit der Dübelgrundplatte 9, wieder nach rechts und schiebt sich dabei über den Rastvorsprung 12.

Eine noch größere Festigkeit der Verbindung könnte erreicht werden, wenn der Steckdübel 6 länger als in der Zeichnung dargestellt, ausgebildet ist. In dem Haltebügel 5 müsste dann eine weitere Dübelöffnung vorgesehen werden, durch die der Steckdübel 6 wieder aus dem, durch den oberen Schenkel der Klammer 2 und den Haltebügel 5 gebildeten, geschlossenen Rahmen austreten kann. Bei einem starken Zug an der Deckplatte, würden dann über den Deckplattenfuß 19 auf den Steckdübel 6 keine Biegekräfte mehr wirken. Der Steckdübel 6 wäre in diesem Fall nur noch Scheerkräften ausgesetzt und könnte so noch größeren, über den Deckplattenfuß 19 auf ihn wirkenden Kräften standhalten.

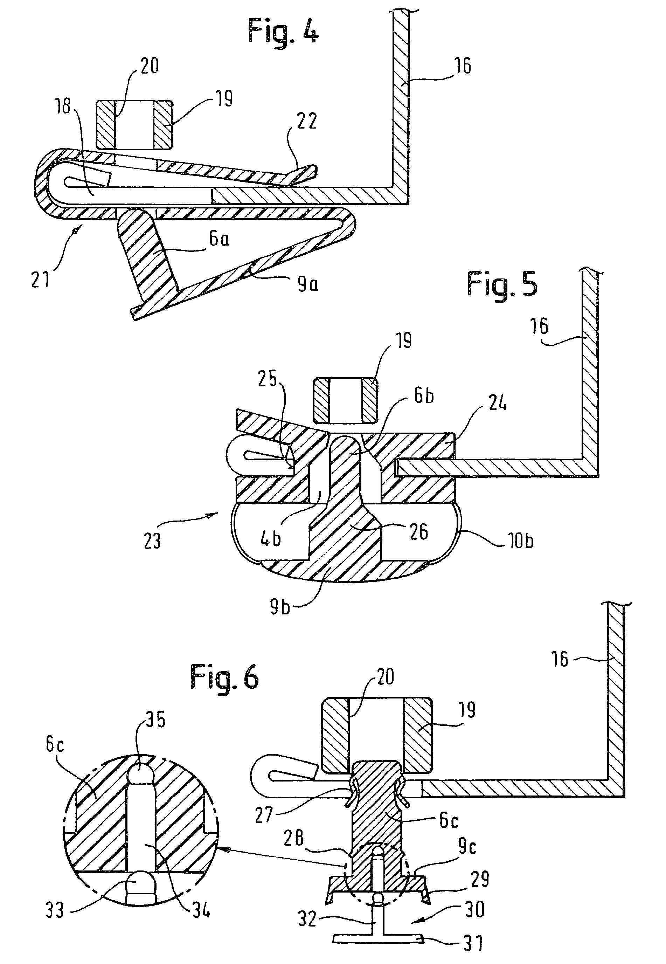

In Fig. 4 ist das vereinfachte Ausführungsbeispiel eines Halteclips 1 als Montageelement dargestellt, welcher hier aufgrund seiner Form als Z-Clip 21 bezeichnet wird. Der sichere Halt des Z-Clips 21, nach dem Aufstecken auf die Seitenwand 16, wird durch den Federschenkel 22 gewährleistet. Dieser Federschenkel 22 drückt in aufgestecktem Zustand mit seinem freien Ende auf den abgewinkelten Endabschnitt der Seitenwand 16 und fixiert den Z-Clip 21 auf diese Weise. Der Steckdübel 6a ist in geöffneter Stellung gezeigt. Die Dübelgrundplatte 9a ist in diesem geöffneten Zustand schräg ausgerichtet und direkt mit dem unteren Schenkel der Klammer 2 verbunden.

Auch bei diesem Ausführungsbeispiel kann der Steckdübel 6a, bereits vor dem Aufstecken des Z-Clips 21 auf die Seitenwand 16, soweit eingedrückt werden, dass sein freies Ende bündig mit der Oberseite des Federschenkels 22 abschließt. Wie bei dem ersten Ausführungsbeispiel wirkt der Steckdübel 6a in dieser Stellung als Führungselement und gewährleistet, dass der Z-Clip 21 nur in der richtigen Position auf die Seitenwand 16 aufgesteckt werden kann.

Der Steckdübel 6a kann ebenfalls mit Rastelementen, wie beispielsweise einem Rastwulst, ausgerüstet sein. Ebenso lässt sich an dem Z-Clip 21 selbst ein Rasthaken vorsehen, der sich in geschlossener Stellung des Steckdübels 6a über das freie Ende der Dübelgrundplatte 9a schiebt.

Der in Fig. 5 gezeigte Steckclip 23 umfasst den Langloch-Einsatz 24 und den Steckdübel 6b. In dem gezeigten Ausführungsbeispiel weist der Langloch-Einsatz 24 vorzugsweise eine ringförmige Nut 25 auf, in die der Rand des Langloches 18 eingreift. Die Nut 25 könnte aber auch als offener Ring oder Ringsegment ausgeführt sein, wobei der Bereich des Langloch-Einsatzes 24, der sich in dem gebördelten, offenen Bereich des Langlochs 18 befindet, ohne Nut ausgeführt ist. Die Nut 25 könnte sogar auf zwei parallele, gerade Abschnitte begrenzt sein, die entlang der geraden Ränder des Langloches 18 verlaufen. Bei den beiden zuletzt beschriebenen Ausführungsformen ist der Langloch-Einsatz 24 gegen Verdrehung gesichert.

Über die beidseitig angebrachten Filmscharniere 10b ist die Dübelgrundplatte 9b mit dem Langloch-Einsatz 24 verbunden. Die Dübelgrundplatte 9b ist hier in der Form einer abgerundeten Kappe ausgeführt. Der Steckdübel 6b ist über den Dübelsockel 26 mit der Dübelgrundplatte 9b verbunden. Der Dübelsockel 26 weist eine Reihe unterschiedlicher Schrägen auf, die mit Schrägen in der Dübelöffnung 4b korrespondieren. Diese unterschiedlichen Schrägen dienen der Klemmung des Steckdübels 6b in geschlossenem Zustand des Einsteckclips 23. Zur Sicherung des Steckdübels 6b können jedoch zusätzlich Rasteinrichtungen vorgesehen sein, wobei beispielsweise an der unten dargestellten Seite des Einsteckclips 23 Rasthaken angebracht sein können, die den Rand der Dübelgrundplatte 9b in geschlossenem Zustand gegen ein Lösen des Steckdübels 6b - beispielsweise durch Vibrationen und Schwingungen - sichern.

Der Einsteckclip 23 ist hier in dem Zustand gezeigt, in dem er vorteilhafter Weise montiert wird. Gegenüber den bisher beschriebenen Ausführungsbeispielen wird der Steckdübel 6b hier nicht als Führungselement für die Montage verwendet. Diese Funktion wird durch den Einsteckclip 23 selbst wahrgenommen, da er sich durch das Langloch 18 hindurch erstreckt und somit nur auf Höhe des Langlochs 18 in die Seitenwand 16 eingeschoben werden kann.

Fig. 6 zeigt nun eine Ausführungsform eines Montageelements, das nicht Teil eines erfindungsgemäßen Kältegeräts ist. Bei dieser Ausführungsform muss vor dem Aufsetzen der Deckplatte kein Halteclip vormontiert werden. Da bei dieser Ausführungsform kein Halteclip verwendet wird, muss der Steckdübel 6c auf andere Weise gegen ein Lösen der Verbindung gesichert werden. Zu diesem Zweck sind einerseits die Federhaken 27 vorgesehen. Beim Eindrücken des Steckdübels 6c in das Dübelloch 20 des Deckplattenfußes 19 werden die Federhaken 27 in Aussparungen des Steckdübels 6c gedrückt. Der Steckdübel 6c kann so lang ausgebildet sein, dass sich auch in eingedrücktem Zustand die Federhaken 27 innerhalb des Dübellochs 20 befinden. Bei dieser Ausführungsform wird der Steckdübel 6c allein durch die Kraft der Federhaken 27, die sich gegen die Innenwand des Dübellochs 20 spreizen, gesichert. Bei einer anderen Ausführungsform, ist die Länge des Steckdübels 6c so ausgelegt, dass sich die Federhaken 27 in geschlossenem Zustand hinter dem Deckplattenfuß 19 befinden. Hier klappen die Federhaken 27, nach dem Durchtritt durch das Dübelloch 20, nach außen und verhindern so ein Lösen des Steckdübels 6c.

Der Steckdübel 6c kann zusätzlich an der Seitenwand 16 gesichert werden. Zu diesem Zweck ist die Spreizwulst 28 vorgesehen, deren Außendurchmesser, nach dem Einschieben des Steckdübels 6c, vergrößert werden kann. Hierzu wird der Spreizstift 30 in das Sackloch 34 in der Dübelgrundplatte 9c eingedrückt. Der Spreizstift 30 besteht aus einer Grundplatte 31, einem Hals 32 und einem von dem Hals abgesetzten Kopf 33. Am Boden des Sacklochs 34 ist eine etwa kugelförmige Höhlung 35 vorgesehen. Der Hals 32 und der Kopf 33 des Spreizstifts 30 weisen in etwa den gleichen Durchmesser wie das Sackloch 34 auf. Die kugelförmige Höhlung 35 besitzt dagegen einen geringeren Durchmesser.

Beim Einschieben des Kopfes 33 in die kleinere Höhlung 35 weitet sich der Spreizwulst 28 hinter dem Langloch 18 in der Seitenwand 16 und sichert den Steckdübel 6c auf diese Weise in seiner Stellung, so dass die Verbindung zwischen Seitenwand 16 und Deckplatte nicht gelöst werden kann. Um das Herausfallen des Spreizstiftes 30 zu verhindern, sind an der Dübelgrundplatte 9c Rastelemente 29 vorgesehen, die sich beim Eindrücken des Spreizstiftes 30 über den Rand der Grundplatte 31 schnappen.

In Bezug auf vorstehende Ausführungsvarianten der Figuren 1 mit 6 wird also das jeweilige Montageteil bzw. Verbindungsteil einfach in eine Aussparung, insbesondere ein Langloch, des abgewinkelten Rands der jeweiligen Seitenwand des Haushalts-Kältegeräts gesteckt und die Seitenwand mit der Deckplatte formschlüssig verbunden. Vorteilhaft ist hierbei insbesondere:
- Eine Rastklammer wird einfach an beide Seitenwand-Langlöcher gesteckt.
- Ein Raststift bzw. Steckdübel ist an die Rastklammer mittels Filmscharnier angespritzt.
- Nach der Montage der Deckplatte bzw. Tischplatte wird der Raststift in den Deckplattenfuß gesteckt.
- Der Raststift wird durch einen zusätzlichen Schnapphaken bzw. Rasthaken gesichert.
- Eine Rastung kann auch über eine Ringschnappverbindung in der Rastklammer erfolgen.
- Der Raststift ist nur über ein Werkzeug, insbesondere einen Schraubendreher lösbar, so dass elektrische Sicherheitsanforderungen erfüllt sind.
- Über einen Bügel wird die Seitenwand hinten zur Deckplatte formschlüssig gehalten.
- Bei einem Schlag oder Transport oder zum Tragen des Haushalts-Kältegeräts hält die Verbindung.
- Die Rastklammer ist einfach und kostengünstig herstellbar und es sind nur geringfügige oder gar keine Änderungen an den miteinander zu verbindenden Teile nötig.

Zweckmäßig kann es insbesondere sein, den Rasthaken 11 in den Ausführungsbeispielen der Figuren 1 mit 6 in seiner Einraststellung bzw. Arretierposition mit Hilfe eines zusätzlichen Federelements lagezusichern bzw. zu fixieren. In der Figur 3c ist ein derartiges Federelement in Form eines Stegelements 37 zusätzlich mit eingezeichnet, das im oberen Bereich der vertikal verlaufenden Schutzplatte 13 angelenkt ist und schräg nach unten in Richtung auf den Rasthaken 11 absteht. An seinem freien Ende weist es vorzugsweise einen verbreiterten Fuß auf, mit dem es auf den oberen Abschnitt des am Rastvorsprung 12 verhakten Rasthakens 11 drückt. Da der Rasthaken 11 und das Federelement 37 in der Einraststellung des Rasthakens gegeneinander verschränkt angeordnet sind, ist eine besonders zuverlässige Schließsicherung des Rasthakens 11 in dessen Einraststellung bereitgestellt.

### Bezugszeichenliste:

- 1: Halteclip
- 2: Klammer
- 3: trichterförmige Erweiterung
- 4: Dübelöffnungen
- 5: Haltebügel
- 6: Steckdübel
- 7: Rippen
- 8: Rastwulst
- 9: Dübelgrundplatte
- 10: Filmscharnier
- 11: Rasthaken
- 12: Rastvorsprung
- 13: Schutzplatte
- 14: Hakenfenster
- 15: Entarretierungsfenster
- 16: Seitenwand
- 17: Bördelrand
- 18: Langloch
- 19: Deckplattenfuß
- 20: Dübelloch
- 21: Z-Clip
- 22: Federschenkel
- 23: Steckclip
- 24: Langloch-Einsatz
- 25: Nut
- 26: Dübelsockel
- 27: Federhaken
- 28: Spreizwulst
- 29: Rastelemente
- 30: Spreizstift
- 31: Grundplatte
- 32: Hals

- 33: Kopf
- 34: Sackloch
- 35: Höhlung
- 36: Verlängerung
- 37: zusätzliches Federelement
- 38: Schraubendreher

## Patentansprüche

1. Kältegerät, insbesondere Haushalts-Kältegerät, mit einem Gehäuse mit Seitenwänden (16) und einer Deckplatte, wobei die Deckplatte ein oder mehrere Deckplattenfü-βe (19) aufweist, die mit den Seitenwänden (16) formschlüssig verbunden sind, wobei ein Steckdübel (6) vorgesehen ist, der sowohl in einer Öffnung (18) der jeweiligen Seitenwand (16) als auch in einer Öffnung (20) des Deckplattenfußes (19) steckt, **dadurch gekennzeichnet, dass** mindestens ein Halteclip (1; 21; 23) vorgesehen ist, und dass der Halteclip (1; 21; 23) an der jeweilgen Seitenwand (16) in einem zum Rand der Seitenwand (16) offenen Langloch (18) vormontiert ist.

2. Kältegerät nach Anspruch 1, **dadurch gekennzeichnet, dass** mindestens eine Rasteinrichtung (8; 11, 12; 27; 28) für den Steckdübel (6) vorgesehen ist.

3. Kältegerät nach Anspruch 2, **dadurch gekennzeichnet, dass** die Rasteinrichtung (11, 12; 28) nur über ein Werkzeug, insbesondere ein Schraubendreher lösbar ist.

4. Kältegerät nach einem der vorhergehenden Ansprüche, **dadurch gekennzeichnet, dass** der Steckdübel (6) fest mit dem Halteclip (1; 21; 23) verbunden ist.

5. Kältegerät nach Anspruch 4, **dadurch gekennzeichnet, dass** der Steckdübel (6) über Filmscharniere (10) mit dem Halteclip (1; 21; 23) verbunden ist.

6. Kältegerät nach einem der vorhergehenden Ansprüche, **dadurch gekennzeichnet, dass** der Halteclip (23) eine ringförmige Nut (25) oder zwei parallele schlitzförmige Nuten aufweist, in die die Seitenwand (16) mit den Rändern des Langlochs (18) eingreift.

7. Kältegerät nach einem der vorhergehenden Ansprüche, **dadurch gekennzeichnet, dass** der Halteclip eine U-förmige Klammer (2) zum Umgreifen des Rands der Seitenwand (16) aufweist.

8. Kältegerät nach Anspruch 7, **dadurch gekennzeichnet, dass** die U-förmige Klammer (2) in ihren beiden Schenkeln zwei gegenüberliegende, an den Querschnitt des Steckdübels (6) angepasste Öffnungen (4) aufweist.

9. Kältegerät nach Anspruch 8, **dadurch gekennzeichnet, dass** ein Schenkel der U-förmigen Klammer federnd ausgebildet ist.

10. Kältegerät nach einem der vorhergehenden Ansprüche, **dadurch gekennzeichnet, dass** der Steckdübel (6) mit einer Dübelgrundplatte (9) verbunden ist.

11. Kältegerät nach Anspruch 10, **dadurch gekennzeichnet, dass** die Dübelgrundplatte (9a) so mit der Klammer (2) verbunden ist, dass sich ein Z-förmiger Querschnitt des Halteclips (21) ergibt.

12. Kältegerät nach einem der Ansprüche 10 oder 11, **dadurch gekennzeichnet, dass** an der Dübelgrundplatte (9) ein Rasthaken (11) federnd angebracht ist.

13. Kältegerät nach Anspruch 12, **dadurch gekennzeichnet, dass** der Rasthaken (11) in seiner Einraststellung durch ein zusätzliches Federelement (37) gehalten ist

14. Kältegerät nach einem der Ansprüche 10 bis13, **dadurch gekennzeichnet, dass** in der Dübelgrundplatte (9) ein Entarretierungsfenster (15) vorgesehen ist.

15. Kältegerät nach einem der Ansprüche 7 bis14, **dadurch gekennzeichnet, dass** ein Haltebügel (5) an einem Schenkel der U-förmigen Klammer (2) vorgesehen ist.

16. Kältegerät nach Anspruch 15, **dadurch gekennzeichnet, dass** an dem Haltebügel (5) ein Rastvorsprung (12) angebracht ist.

17. Kältegerät nach Anspruch 16, **dadurch gekennzeichnet, dass** der Rastvorsprung (12) durch eine Schutzplatte (13) abgedeckt ist.

18. Kältegerät nach Anspruch 17, **dadurch gekennzeichnet, dass** die Schutzplatte (13) an der Verlängerung (36) eines Schenkels der U-förmigen Klammer (2) angebracht ist, wobei die Verlängerung (36) ein Hakenfenster (14) zum Durchtritt des Rasthakens (11) aufweist.

## Claims

1. Refrigerating appliance, particularly domestic refrigerating appliance, with a housing with side walls (16) and a cover plate, wherein the cover plate has one or more cover plate feet (19) which are mechanically positively connected with the side walls (16), wherein a plug pin (6) is provided which plugs not only into an opening (18) of the respective side wall (16), but also into an opening (20) of the cover plate foot (19), **characterised in that** at least one retaining clip (1; 21; 23) is provided and that the retaining clip (1; 21; 23) is pre-mounted at the respective side wall (16) in a slot (18) open towards the edge of the side wall (16).

2. Refrigerating appliance according to claim 1, **characterised in that** at least one detent device (8; 11, 12; 27; 28) for the plug pin (6) is provided.

3. Refrigerating appliance according to claim 2, **characterised in that** the detent device (11, 12; 28) is releasable only by way of a tool, particularly a screwdriver.

4. Refrigerating appliance according to any one of the preceding claims, **characterised in that** the plug pin (6) is fixedly connected with the retaining clip (1; 21; 23).

5. Refrigerating appliance according to claim 4, **characterised in that** the plug pin (6) is connected with the retaining clip (1; 21; 23) by way of a film hinge (10).

6. Refrigerating appliance according to any one of the preceding claims, **characterised in that** the retaining clip (23) has an annular groove (25) or two parallel slot-shaped grooves in which the side wall (16) engages by the edges of the slot (18).

7. Refrigerating appliance according to any one of the preceding claims, **characterised in that** the retaining clip comprises a U-shaped clasp (2) for engaging around the edge of the side wall (16).

8. Refrigerating appliance according to claim 7, **characterised in that** the U-shaped clasp (2) has in its two limbs two mutually opposite openings (4) matching the cross-section of the plug pin (6).

9. Refrigerating appliance according to claim 8, **characterised in that** one limb of the U-shaped clasp is constructed to be resilient.

10. Refrigerating appliance according to any one of the preceding claims, **characterised in that** the plug pin (6) is connected with a pin base plate (9).

11. Refrigerating appliance according to claim 10, **characterised in** the pin base plate (9a) is so connected with the clasp (2) that a Z-shaped cross-section of the retaining clip (21) results.

12. Refrigerating appliance according to one of claims 10 and 11, **characterised in that** a detent hook (11) is resiliently mounted on the pin base plate (9).

13. Refrigerating appliance according to claim 12, **characterised in that** the detent hook (11) in its detent setting is retained by an additional spring element (37).

14. Refrigerating appliance according to any one of claims 10 to 13, **characterised in that** an unlocking window (15) is provided in the pin base plate (9).

15. Refrigerating appliance according to any one of claims 7 to 14, **characterised in that** a retaining bracket (5) is provided at a limb of the U-shaped clasp (2).

16. Refrigerating appliance according to claim 15, **characterised in that** a detent projection (12) is formed at the retaining bracket (5).

17. Refrigerating appliance according to claim 16, **characterised in that** the detent projection (12) is covered by a protective plate (13).

18. Refrigerating appliance according to claim 17, **characterised in that** the protective plate (13) is formed at a prolongation (36) of a limb of the U-shaped clasp (2), wherein the prolongation (36) has a hook window (14) for passage of the detent hook (11).

## Revendications

1. Appareil réfrigérant, en particulier appareil ménager réfrigérant, avec un habillage comportant des parois latérales (16) et une plaque de recouvrement, dans lequel la plaque de recouvrement présente un ou plusieurs pieds de plaque de recouvrement (19), qui sont reliés aux parois latérales (16) par complémentarité de formes, dans lequel est prévue une cheville de fixation (6) qui se fixe aussi bien dans une ouverture (18) de la paroi latérale correspondante (16) que dans une ouverture (20) du pied de plaque de recouvrement (19), **caractérisé en ce qu'**au moins un clip de maintien (1 ; 21 ; 23) est prévu et **en ce que** le clip de maintien (1 ; 21 ; 23) est prémonté sur la paroi latérale correspondante (16) dans un orifice longitudinal (18) ouvert vers le bord de la paroi latérale (16).

2. Appareil réfrigérant selon la revendication 1, **caractérisé en ce qu'**au moins un système d'enclenchement (8 ; 11, 12 ; 27 ; 28) est prévu pour la cheville de fixation (6).

3. Appareil réfrigérant selon la revendication 2, **caractérisé en ce que** le système d'enclenchement (11, 12 ; 28) n'est détachable que par le biais d'un outil, en particulier un tournevis.

4. Appareil réfrigérant selon l'une des revendications précédentes, **caractérisé en ce que** la cheville de fixation (6) est reliée de manière fixe au clip de maintien (1 ; 21 ; 23).

5. Appareil réfrigérant selon la revendication 4, **caractérisé en ce que** la cheville de fixation (6) est reliée au clip de maintien (1 ; 21 ; 23) par des charnières souples (10).

6. Appareil réfrigérant selon l'une des revendications précédentes, **caractérisé en ce que** le clip de maintien (1 ; 21 ; 23) présente une rainure annulaire (25) ou deux rainures en forme de fente parallèles, où la paroi latérale (16) s'engage avec les bords de l'orifice longitudinal (18).

7. Appareil réfrigérant selon l'une des revendications précédentes, **caractérisé en ce que** le clip de maintien présente une pince en forme de U (2) pour envelopper le bord de la paroi latérale (16).

8. Appareil réfrigérant selon la revendication 7, **caractérisé en ce que** la pince en forme de U (2) présente dans ses deux branches deux ouvertures (4) se faisant face adaptées à la coupe transversale de la cheville de fixation (6).

9. Appareil réfrigérant selon la revendication 8, **caractérisé en ce qu'**une branche de la pince en forme de U est configurée de manière élastique.

10. Appareil réfrigérant selon l'une des revendications précédentes, **caractérisé en ce que** la cheville de fixation (6) est reliée à une plaque de base de cheville (9).

11. Appareil réfrigérant selon la revendication 10, **caractérisé en ce que** la plaque de base de cheville (9a) est reliée avec la pince (2) de sorte que l'on obtient une coupe transversale du clip de maintien (21) en forme de Z.

12. Appareil réfrigérant selon la revendication 10 ou 11, **caractérisé en ce que** sur la plaque de base de cheville (9) est installé de manière élastique un crochet d'encliquetage (11).

13. Appareil réfrigérant selon la revendication 12, **caractérisé en ce que** le crochet d'encliquetage (11) est maintenu dans sa position de blocage par le biais d'un élément élastique supplémentaire (27).

14. Appareil réfrigérant selon l'une des revendications 10 à 13, **caractérisé en ce que** dans la plaque de base de cheville (9) est prévue une fenêtre de déblocage (15).

15. Appareil réfrigérant selon l'une des revendications 7 à 14, **caractérisé en ce qu'**un étrier de maintien (5) est prévu au niveau d'une branche de la pince en forme de U (2).

16. Appareil réfrigérant selon la revendication 15, **caractérisé en ce que** sur l'étrier de maintien (5) est installée une saillie d'encliquetage (12).

17. Appareil réfrigérant selon la revendication 16, **caractérisé en ce que** la saillie d'encliquetage (12) est recouverte par une plaque de protection (13).

18. Appareil réfrigérant selon la revendication 17, **caractérisé en ce que** la plaque de protection (13) est installée sur le prolongement (36) d'une branche de la pince en forme de U (2), dans lequel le prolongement (36) présente une fenêtre pour crochet (14) pour le passage du crochet d'encliquetage (11).
